# EUROPEAN PATENT APPLICATION

(11) **EP 4 851 937 A1**
(43) Date of publication of application: **09.12.2026**
(21) Application number: 25300080.6
(22) Date of filing: 06.06.2025
(51) Int. Cl.: G06T 15/50

(54) **ILLUMINATION ENHANCEMENT IN DIGITAL IMAGES**

(71) Applicant: Sony Interactive Entertainment Inc., Tokyo 108-0075 (JP)
(72) Inventor: TORANO, Jesus Alejandro Zarzar, Tokyo, 108-0075 (JP); LECHAT, Alexis, Tokyo, 108-0075 (JP); MAKRIDIS, Pavlos, Tokyo, 108-0075 (JP); TREDER, Matthias, Tokyo, 108-0075 (JP)
(74) Representative: Fish & Richardson P.C.

(57) **Abstract**

Methods, systems, and apparatus including computer programs encoded on computer storage media, for transferring a global illumination style. One of the methods includes maintaining, for each of a plurality of scenes, training data that includes a) a first frame of the scene that was rendered using a first process that can generate frames in real time with minimal light illumination and b) a second frame of the scene that was rendered using a second, different process that generates frames in an offline process slower than the first process and that has more light illumination; training an artificial intelligence model to transform a minimally illuminated frame generated using the first process to simulate an illuminated frame generated using the second process; and storing the trained artificial intelligence model in memory for use enhancing images generated using the first process to have improved light illumination.

## Description

### TECHNICAL FIELD

This specification relates generally to real-time rendering of digital images and more particularly to using a model to transfer a global illumination style for computer generated images.

### BACKGROUND

Real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

### SUMMARY

This specification describes systems, methods, devices, and other techniques relating to real-time rendering of digital images and more particularly to using a model to transfer a global illumination style for computer generated images.

In general, one aspect of the subject matter described in this specification can be embodied in methods that include the actions of maintaining, for each of a plurality of scenes, training data that includes a) a first frame of the scene that was rendered using a first process that can generate frames in real time with minimal light illumination and b) a second frame of the scene that was rendered using a second, different process that generates frames in an offline process slower than the first process and that has more light illumination, training an artificial intelligence model to transform a minimally illuminated frame generated using the first process to simulate an illuminated frame generated using the second process, and storing the trained artificial intelligence model in memory for use enhancing images generated using the first process to have improved light illumination.

In general, one aspect of the subject matter described in this specification can be embodied in methods that include the actions of maintaining an artificial intelligence model that was trained to transform a minimally illuminated frame generated using a first process that can generate frames in real time with minimal light illumination to simulate an illuminated frame generated using a second, different process that generates frames in an offline process slower than the first process and that has more light illumination, generating, using the first process, a frame, generating an enhanced frame by transforming the frame using the artificial intelligence model, and rendering the enhanced frame.

Other implementations of this aspect include corresponding systems, apparatus, and computer programs, configured to perform the actions of the methods, encoded on computer storage devices.

These and other implementations can each optionally include one or more of the following features, alone or in combination.

In some implementations, the second process can generate frames in the offline process that is too slow for real time frame rendering.

In some implementations, training the artificial intelligence model can use a loss function with one or more terms from a group comprising a perceptual loss term, a reconstruction loss term, or an adversarial loss term.

In some implementations, training the artificial intelligence model can use, for a loss function, a combination of a perceptual loss and a reconstruction loss.

In some implementations, training the artificial intelligence model can include generating, as part of the training process, the illuminated frame that simulates generation using the second process. The method can include processing, using a discriminator neural network, the illuminated frame to generate a discriminator output that indicates whether the illuminated frame satisfies a similarity criterion for second frames generated using the second process; and updating the artificial intelligence model using the discriminator output as a part of an adversarial loss term.

In some implementations, the method can include jointly training the discriminator neural network with the artificial intelligence model.

In some implementations, generating the discriminator output can include generating a discriminator score that indicates a likelihood whether the illuminated frame satisfies the similarity criterion for second frames generated using the second process.

In some implementations, the method can include, for a scene from the plurality of scenes: generating the first frame using the first process; and generating the second frame using the second, different process.

In some implementations, the method can include determining, using a differentiator model and for a scene type from a plurality of scene types, whether output from the artificial intelligence model does not satisfy a training criterion; in response to determining that the output from the artificial intelligence model does not satisfy the training criterion, determining an environment in a game that has the scene type; and simulating, using the game, the environment that has the scene type, wherein generating the first frame and the second frame occur while simulating the environment of the game that has the scene type.

In some implementations, simulating the environment of the game that has the scene type can occur during an offline process.

In some implementations, at least some scenes from the plurality of scenes can have one or more of different points of view or depict different moving objects.

In some implementations, maintaining the training data can include, for at least some scenes from the plurality of scenes, sequence training data that includes a) a plurality of first frames that were each rendered using the first process and b) a plurality of second frames that were each rendered using the second process, the plurality of first frames including a frame for each frame in the plurality of second frames.

In some implementations, training the artificial intelligence model can include training the artificial intelligence model to transform the minimally illuminated frame generated using the first process to simulate the illuminated frame generated using the second process while minimizing changes to textures in the minimally illuminated frame.

In some implementations, the method can include discarding the frame after transforming the frame using the artificial intelligence model to generate the enhanced frame.

In some implementations, generating the frame can include generating the frame for a game. The method can include maintaining a plurality of artificial intelligence models that each have a different type; and selecting, using a complexity of a scene being rendered for the game, the artificial intelligence model for generation of the frame.

In some implementations, generating the frame can include generating the frame for a game, the method can include maintaining a plurality of artificial intelligence models that each have a different type; and selecting, using a target minimum frame rate for the game, the artificial intelligence model for generation of the frame.

In some implementations, generating the frame can include generating the frame for a game. The method can include maintaining a plurality of artificial intelligence models that each have a different type; and selecting, using a first property of the game or a second property of a device executing the game, the artificial intelligence model for generation of the frame.

In some implementations, the different types of models in the plurality of artificial intelligence models can be a diffusion model and a convolutional neural network.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages.

In some implementations, the systems and methods described in this specification can enable high-quality rendering of images at reduced runtime costs. This can include generating frames using direct lighting, e.g., only, which can have a low runtime cost, and applying a transformation that represents indirect lighting. Compared to global approximations or hybrid raster-path tracing approaches, the systems and methods described in this specification can offer a lower runtime cost by offloading complex lighting calculations to a learned model during post-processing, e.g., by generating an enhanced frame by transforming a frame using an artificial intelligence model after generating the frame using a first process.

In some implementations, the systems and methods described in this specification can enable more accurate capturing nuanced global effects compared to handcrafted approximations of global illumination. This can include training an artificial intelligence model to learn realistic illumination patterns directly from path-traced examples. The artificial intelligence model can capture nuanced global lighting effects such as color bleeding, soft indirect shadows, and subtle specular interactions.

In some implementations, the systems and methods described in this specification can work with existing systems, requiring minimal disruption to existing workflows. This can include implementing a transformation that occurs as a post-processing step.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B depict diagrams representative of techniques for real-time rendering of images.
FIGs. 2A to 2E depict diagrams and images representative of noise introduced in real-time rendering of images.
FIG. 3 shows an example system for training an artificial intelligence model to render an illuminated frame in real-time.
FIG. 4 is a flow diagram of an example process in accordance with implementations of the present disclosure.
FIG. 5 shows an example of a computing device 500 and associated accessories that can be employed to execute implementations of the present disclosure.
Like reference numbers and designations in the various drawings indicate like elements.

### DETAILED DESCRIPTION

The technology of this patent application is directed to real-time rendering of digital images and more particularly to using a model to transfer a global illumination style for computer generated images. More particularly, the technology of this patent application can train a model to transform a minimally illuminated frame to simulate an illuminated frame, e.g., that is normally generated in an offline process.

Sometimes, a system might need to render an illuminated frame in real-time for use in, e.g., a video game or displaying an animated movie. A frame can be, for example, a video frame that is an image of a scene, e.g., an ocean, a forest, a city, or a living room, at a moment in time or a video over a time period. A minimally illuminated frame can be generated using a first process. The first process can render a frame using a simple lighting model, such as a direct illumination model, e.g., for a rasterization process. The minimally illuminated frame might not satisfy target illumination criteria, e.g., lighting characteristics of the rendered frame might not be as realistic as lighting characteristics of frames that meet a target illumination level. The same frame can be rendered with more light illumination, e.g., global illumination, using a second process. The second process can use a more complex lighting model such as a full path tracer. The second process can be an offline process and can be too slow for real-time frame rendering.

To render a frame in real-time with more illumination than frames rendered using the first process, the system can use an artificial intelligence model to transform a minimally illuminated frame generated using the first process to simulate an illuminated frame generated using the second process. The system can train the artificial intelligence model using training data that includes, for multiple scenes, a training input frame and a target output frame. The training input frame can be a frame or frame sequence of the scene that was rendered using the first process. The target output a frame of the scene that was rendered using the second process, e.g., while maintaining the texture detail of the frame generated using the first process.

After training, the artificial intelligence can enhance images that were generated using the first process. The enhanced frame can have changed improved light illumination, e.g., improved light illumination. The system can render the enhanced frame, e.g., on a computer screen, on a television screen, on a display of a gaming device, or any combination of these.

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

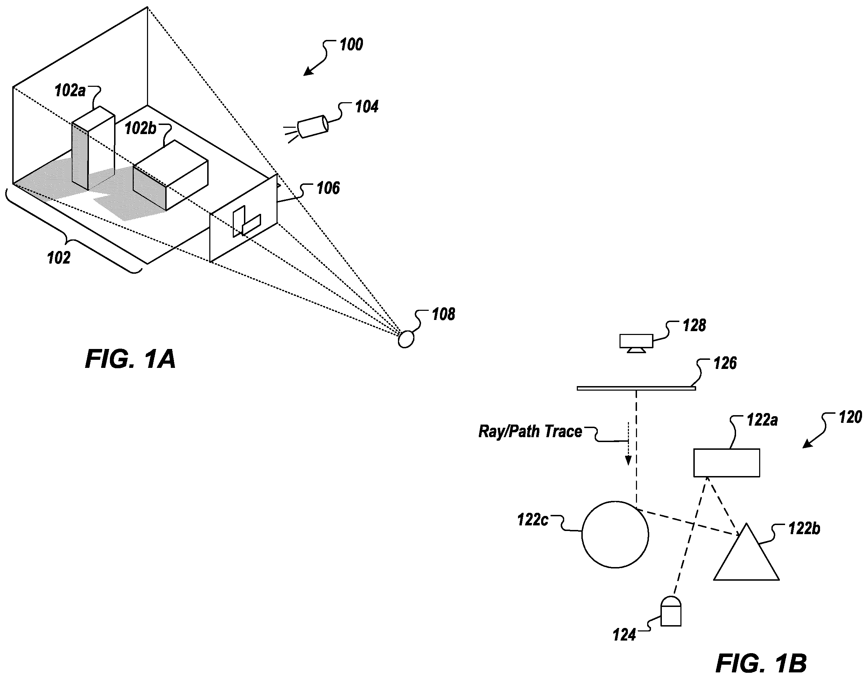

Real-time rendering of images is discussed in further detail herein with reference to FIGs. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path. For clarity, the term path tracing is used for the following discussion.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as ray tracing and path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

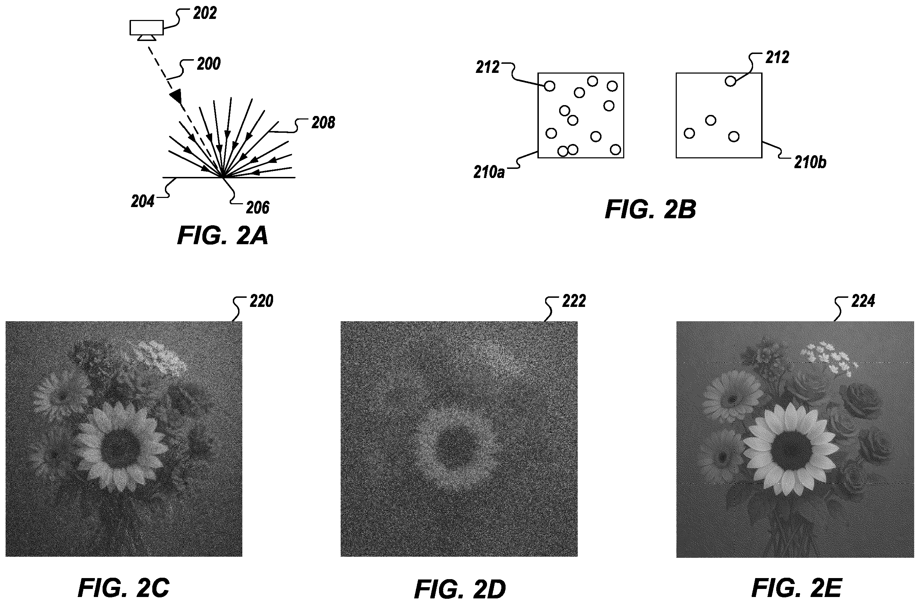

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 202 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In Monte Carlo rendering, denoising can be implemented in various ways. While convolutional neural networks (CNNs) are commonly used for Monte Carlo rendering, Vision Transformers (ViTs) have recently shown strong performance in image understanding and are being applied to Monte Carlo rendering pipelines. A ViT is a transformer-based neural network adapted for image processing tasks, such as denoising and adaptive sampling in Monte Carlo rendering. A ViT operates on noisy, low SPP rendered images and can utilize auxiliary data, such as surface normals, depth, and albedo. The input image can be divided, for example, into fixed-size patches, which are processed as tokens (e.g., using self-attention) to capture spatial and contextual relationships. The output of the ViT is a denoised image approximating the quality of a high SPP render. A ViT can also support adaptive sampling by identifying regions requiring additional samples, thereby improving efficiency and image fidelity, while reducing computational cost.

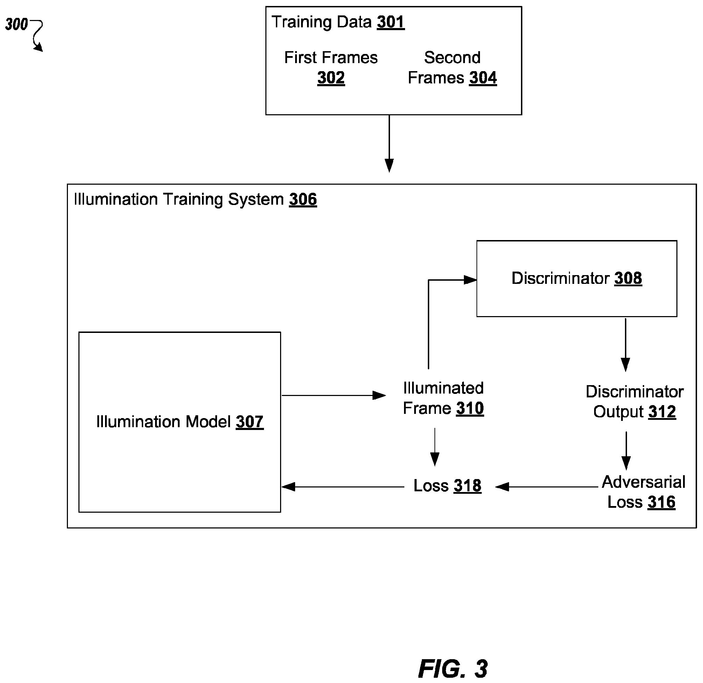

FIG. 3 shows an example environment 300 for training an artificial intelligence model to render an illuminated frame in real-time. The environment 300 includes an illumination training system 306 that can train an illumination model 307 to transform a minimally illuminated frame to simulate an illuminated frame 310.

A frame can be a still image or a frame from a video sequence. In some examples, a frame can be a video frame that is a still image of a scene at a moment in time. In some examples, a sequence of frames can depict a scene over a time period, e.g., 3 seconds, 30 seconds, 5 minutes, or any other appropriate time period. The scene can depict an environment, e.g., an ocean, a forest, a city, or a living room. The scene can include one or more objects in the environment, e.g., a person, an animal, an apple, a bed, a sun, a vase, a car, or any combination of these. The scene can be associated with one or more lighting categories, such as 'low light', 'high light', 'medium light', 'indoor light', 'outdoor light', 'sunlight', 'moonlight', or a combination of these. In some examples, the frame can be an image or video that is rendered from a video game. In some examples, the frame can be an image or video that is rendered from an animated film.

The illumination training system 306 can train the illumination model 307 using training data 301. The training data can include data for multiple training scenes. The training scenes can depict a variety of environments. For example, the training data can include 1000 ocean scenes, 6000 forest scenes, 10000 city scenes, and 500 living room scenes. The training scenes can be associated with a variety of lighting categories. For example, half of the training scenes can be associated with 'indoor light' and half of the training scenes can be associated with 'outdoor light'. One or more of the training scenes can have one or more of different points of view. For example, the training scenes can include one or more scenes that depict an ocean from a birds-eye view, one or more scenes that depict an ocean from an eye-level view, and one or more scenes that depict an ocean from an underwater view. One or more of the training scenes can depict different moving objects. For example, the training scenes can include scenes that depict a person swimming in an ocean and scenes that depict a gold coin drifting in an ocean.

The training data can include, for the multiple training scenes, a respective first frame and a respective second frame. The first frame can be a training input frame and the second frame can be target training output frame for the scene. The first frame for the scene can be a frame that was rendered using a first process that can generate frames in real time with minimal light illumination. The second frame for the scene can be a scene that was rendered using a second, different process. The second process can generate frames that have more light illumination, more complex light illumination, or both, than frames generated using the first process.

The first process can be a simple rendering process. In some examples, the environment 300 can generate the first frames 302 using a rasterization engine. The rasterization engine can convert a scene into pixels that can be displayed on a screen or printed. The rasterization engine can use a simple lighting model to render the first frame 302.

The simple lighting model can be, for example, a direct illumination model. A direct illumination model can incorporate light that comes directly from a light source while generating the first frame 302. The resulting image can be a minimally illuminated frame. The minimally illuminated frame might not satisfy target illumination criteria, e.g., lighting characteristics of the rendered first frame might not be as realistic as lighting characteristics of frames that meet a target illumination level. For example, a scene can depict a wooden gold coin that is floating in an ocean. The light, shading, or both, of the gold coin in the first frame 302 might not look similar to the light, shading, or both, of a photograph of a real gold coin that is floating in an ocean. In some examples, indirect light effects, such as color bleeding, of the first frame 302 might not look realistic. For example, a scene can depict a room with a ceiling light and a red wall on one side and otherwise grey floor and walls. If color bleeding effects are realistic, the grey floor next to the wall can get a red tint from indirect light bouncing off the wall. The first frame 302 might not include realistic color bleeding effects, e.g., the red tint, and the grey floor can remain grey.

The second process can be a more complex rending process. In some examples, the environment 300 can generate the second frames 304 using a path trace engine. The path trace engine can render the same frame with more light illumination than when rendered using the rasterization engine. The path trace engine can use a more complex lighting model to render the second frame 304.

The more complex lighting model can be a global illumination model. A global illumination model can incorporate light that comes directly from a light source as well as indirect light sources while generating the second frame 304. The indirect light sources can be light rays from the same light source that are reflected by other surfaces in the scene. The other surfaces can be, for examples, walls, a ground, a ceiling, a sky, objects in the scene, or any combination of these. In this way, the rendering of one object in the scene can affect the rendering of other objects in the scene. The global illumination model can account for light rays that reflect off both reflective surfaces and non-reflective surfaces, e.g., both of which might still reflect light. The resulting image can be a more illuminated version of the first frame. The resulting image can satisfy the target illumination criteria, e.g., the reflections, lighting, and shadows of the rendered second frame can look realistic. For example, the lighting and shading of the wooden gold coin that is floating in the ocean in the second frame can look similar to the lighting and shading of a photograph of gold coin that is floating in an ocean.

The path tracing engine can a full path tracer that uses path tracing to render all pixels in the second frame. Path tracing can simulate global illumination to account for more complex interactions and to improve image realism. Path tracing can simulate complex light paths including indirect lighting, color bleeding, caustics, and the like. For path tracing, each pixel requires numerous rays (e.g., tens, hundreds, thousands) to be considered in order to provide a noise-free, accurate image. This is computationally expensive and can be too slow for real-time rendering under realistic hardware constraints, e.g., for an end user device. Path tracing is described in further detail above with reference to FIG. 1. The path tracing engine can generate the second frame 304 in an offline process. The offline process can take more time than real-time frame rendering, e.g., 5 minutes to generate a frame.

Some of the training data can be sequence training data. The training data can include, for at least some scenes, a series of images that represent sequential events in a video. The training data can include first frames and corresponding second frames for the images in the series of images. For example, if a video depicts a gold coin that is floating in an ocean, the scene can be divided into 25 instances of the gold coin at different points along its floatation path at 25 chronological time points. The chronological time points can be selected given a target frame rate for training the illumination model 307, e.g., 30 FPS.

The rasterization engine can, using the simple rendering process, render 25 minimally illuminated first frames 302 representing the 25 instances of the scene. The path trace engine can render, using the more complex rendering process, 25 corresponding second frames with more illumination that represent the same 25 instances of the scene. Similarly, the training data 301 can include sequential training data for a variety of scenes, e.g., scenes depicting a person throwing a basketball, a bird flying, or a car racing. In some examples, all training data 301 can be sequential training data.

The illumination training system 306 can train the illumination model 307 to transform a minimally illuminated frame generated using the simple rendering process to simulate an illuminated frame 310 generated using the more complex rendering process. The illumination training system 306 can train the illumination model 307 to generate an illuminated frame 310 that has realistic lighting characteristics that are similar to the lighting characteristics of the second frames rendered using the more complex rendering process.

In some examples, the illumination training system 306 can train the illumination model 307 to transform the minimally illuminated frame to simulate the illuminated frame generated using the more complex rendering process while minimizing changes to textures represented by the frames. Textures can include colors, a realism level, a resolution level, other style characteristics, or any combination of these, that are not related to lighting. Textures can simulate real-world materials such as paper, wood, water, metal, and skin. The illumination training system 306 can train the illumination model 307 to maintain textures from the minimally illuminated frame while adding additional illumination. In this way, the illuminated frame 310 can maintain original style characteristics that are not related to lighting, e.g., when a developer of a game or an artist requests that a rendering maintains a particular intended realism level. For example, though water in an ocean can appear to have waves due to textural characteristics of real water, a developer can intend for the water to be flat or have a different color for stylistic purposes.

The illumination model 307 can be an artificial intelligence model. The artificial intelligence model can be an image-to-image translation model. The artificial intelligence model can include one or more machine learning models. The machine learning models can include generative models such as diffusion models or transformer models. A diffusion model can, for example, be a stable diffusion models that can generate images based on specific styles. A transformer model can, for example, be a vision transformer (ViT) model that uses a transformer encoder to process embeddings representing patches of an image. The machine learning models can include convolutional neural networks (CNN) that are used for computer vision tasks such as image classification, object detection, image segmentation, other feature extraction tasks, or any combination of these. A CNN can, for example be a U-net network or a residual neural network.

In some examples, the illumination training system 306 can train multiple types of machine learning models to transform minimally illuminated frames. The illumination training system 306 can train the machine learning models simultaneously or at separate times. In some examples, the illumination training system 306 can train one machine learning model to use for rendering more complex scenes and one machine learning model to use for rendering less complex scenes.

The illumination training system 306 can train the illumination model 307 using a loss function. The loss function can include one or more loss terms 316, 318. The illumination training system 306 can optimize the loss function over multiple training iterations. The loss terms 316, 318 can include a perceptual loss term, a reconstruction loss term, an adversarial loss term, or any combination of these. For example, the loss function can include a perceptual loss term and a reconstruction loss term. In some examples, the loss function can include a perceptual loss term, a reconstruction loss term, and an adversarial loss term.

For a scene, a perceptual loss term can measure perceptual differences between the illuminated frame 310 generated by the illumination model 307 and the second frame 304 for the scene that was rendered using the more complex rendering process. The perceptual loss term can account for differences in high level features between the frames. The perceptual loss term can account for a style loss. The illumination training system 306 can minimize a style loss to ensure that the style of the illuminated frame 310 matches the style of the second frame. The perceptual loss term can measure a distance metric between the illuminated frame 310 and the second frame 304. The distance metric can be, for example, a Euclidean distance.

For a scene, a reconstruction loss term can measure discrepancies between the illuminated frame 310 generated by the illumination model 307 and the second frame 304 for the scene that was rendered using the more complex rendering process. The reconstruction loss can be, for example a Least Absolute Deviations, or L1, loss term or a Least Squares Error, or L2, Loss term. The reconstruction loss can measure pixel-by-pixel differences between the frames.

For a scene, an adversarial loss term 316 can measure a quality level, e.g., blurriness level, detail level, and shading quality, of the illuminated frame 310 generated by the illumination model 307. The illumination training system 306 can use a discriminator neural network 308 to determine the adversarial loss term. The illumination training system 306 can generate the illuminated frame 310 using the illumination model 307. The discriminator neural network 308 can process the illuminated frame 310 to generate a discriminator output 312.

The discriminator output 312 can indicate whether the illuminated frame satisfies a similarity criterion for second frames rendered using the more complex rendering process. The similarity criterion can be that the discriminator output classifies the illuminated frame 310 as more likely to be a second frame in the training data 301 than to have been generated using the illumination model 307. The discriminator neural network 308 can predict whether the illuminated frame 310 is a second frame from the training data 301 or whether the illuminated frame 310 was generated using the illumination model 307. The discriminator output 312 can be a discriminator score that indicates a likelihood that the illuminated frame 310 is a second frame 304 in the training data 301.

In some examples, the discriminator neural network 308 can determine the discriminator output 312 solely based on illumination characteristics without evaluating textural qualities of the image, while minimizing impact on textural qualities, or both. For example, a minimally illuminated image can have a low resolution or realism. The corresponding illuminated frame 310 generated by the illumination model 307 can maintain the same low resolution or realism. The discriminator neural network 308 can evaluate shading characteristics such as shadows and reflections when determining if the illuminated frame was generated using the illumination model 307. In some examples, the resolution level, realism, and other textural characteristics do not affect the discriminator output.

The discriminator output 312 can be a percentage or a label. For example, a discriminator output 312 can indicate that the illuminated frame 310 has a 78% likelihood of being generated by the more complex rendering process. In some examples, the discriminator output 312 can be a label that indicates a categorization for the illuminated frame 310. For example, if the discriminator neural network 308 determines that the illuminated frame 310 has a 78% likelihood of being generated by the more complex rendering process, the discriminator output can be a label indicating 'training data'. If the discriminator neural network 308 determines that the illuminated frame 310 has a 33% likelihood of being generated by the path trace engine, the discriminator output can be a label 'illumination model'.

The illumination training system 306 system can use the discriminator output 312 as a part of the adversarial loss term 316. The illumination training system 306 can train the illumination model 307 so that the discriminator neural network 308 cannot, or is less likely to, distinguish between frames generated by the illumination model 307 and frames that are second frames from the training data 301. The adversarial loss term can measure a difference between the discriminator output and the actual classification of the illuminated frame 310. For example, since the illuminated frame 310 is generated using the artificial intelligence model, the adversarial loss can be low if the discriminator output is 'illumination model' or '33%'. The adversarial loss can be high if the discriminator output is, for example, 'training data' or '78%'.

To optimize the loss function, the illumination training system 306 can minimize perceptual loss terms and reconstruction loss terms 318 while maximizing adversarial loss terms across the scenes in the training data 301. At the end of a training iteration, the illumination training system 306 can update parameters of the artificial intelligence model based on the loss function for that training iteration. In some implementations, the illumination training system 306 can jointly train the discriminator neural network with the artificial intelligence model. The illumination training system 306 can train the discriminator by optimizing a discriminator loss term.

The illumination training system 306 can evaluate the performance of the illumination model 307 for different scene types. The illumination training system 306 can use a differentiator model to determine whether output from the artificial intelligence model satisfies a training criterion for a particular scene type. The training criterion can be, for example, a value of a loss function or a similarity score. For example, the illumination training system 306 can determine that the illumination model 307 performs adequately for a scene type if a similarity score is above a predetermined threshold value. The training system 306 can determine that the illumination model 307 performs adequately for some scene types and does not perform well for other scene types. Difficulty of simulating illumination can vary among different scene types. In some examples, the training criteria, e.g., similarity score thresholds, can be customized for different types of scenes.

If the training criteria is not satisfied for a particular scene type, the environment 300 can generate more training data 301 for that scene type. For example, the environment 300 can generate the training data from a video game or a movie that has the scene type. The environment 300 can use the game, movie, or some combination of both, to simulate the environment that has the scene type. Game training data and movie training data can be for a single game or movie or a combination of multiple games or multiple movies. The environment 300 can generate additional training data 301 while simulating the environment with the scene type. The environment 300 can generate, for scenes of the scene type, first frames 302 using the rasterization engine and second frames 304 using the path trace engine. The environment 300 can generate the additional training data 301 during an offline process between training iterations. At a next training iteration, the illumination training system 306 can train the illumination model 307 using the generated training data 301.

For example, the illumination training system 306 can determine that the illumination model 307 can simulate forest scenes that satisfy the training criterion but cannot simulate ocean scenes that satisfy the training criterion. Illumination can be more difficult to simulate for ocean scenes than forest scenes. The environment 300 can generate more training data for ocean scenes from a sailing video game that has scenes that depict oceans.

After training, the environment 300 can store the illumination model 307 in memory for use in enhancing minimally illuminated images and videos to have improved light illumination. When rendering an image or video, e.g., for a video game or animated movie, the environment 300 can first generate an initial frame for a scene using a simple rendering process, e.g., a direct illumination process.

The environment 300, e.g., a device executing a game, can generate an enhanced frame by transforming the initial frame using the trained illumination model 307. The environment 300 can render the enhanced frame. The enhanced frame can simulate a frame generated by a global illumination process. The device can render the enhanced frame, e.g., on a computer screen, on a television screen, on a display of the gaming device, or any combination of these.

The device can generate enhanced frames for multiple sequential frames to render a video with complex, e.g., global, illumination. The illumination model 307 can generate and render the enhanced frames in real-time. This can allow for real-time rendering of videos, frame sequences, or both. In some examples, the device can discard the initial frame after transforming the frame using the illumination model 307 to generate the enhanced frame.

The environment 300 can, for different scenes, choose a type of artificial intelligence model, e.g., illumination model 307, to use for generating the frame. Some scenes can require more computational resources to render than others. For example, a complex scene can depict an ocean with four gold coins, a swimmer, fifteen fish, and two boats. A scene with less complexity can depict a living room with no furniture. More complex scenes, e.g., scenes with more objects to render and for light to reflect off of, can require more compute power to render. Generating frames for more complex scenes can be slower than generating frames for less complex scenes. As a result, the device can select an illumination model given the complexity, or predicted complexity, of corresponding scenes for which the model will generate frames. The gaming device might only be able to predict the scene complexity given the type of environment for the scene since the actual complexity might be different, e.g., the gaming device might not have full knowledge of what will be depicted in a scene before generating an initial frame for that scene but might need to select the illumination model before frame generation.

In some examples, the device can select which artificial intelligence model to use based on a target minimum frame rate for the game. Frame rate can indicate a number of frames presented on the screen per second. A frame rate can indicate a quality level of a video sequence. Lower frame rates, e.g., below 30, can have a visual stutter and decreased flow. Higher frame rates can be easier to view and more desirable for viewers, e.g., players of a video game.

In some examples, the environment 300 can choose a faster artificial intelligence model for rendering complex scenes than for rendering the less complex scene. The machine learning model to use for rendering less complex scenes can be, for example, a diffusion model that can create realistic images. The machine learning model to use for more complex scenes can be, for example, a convolutional neural network that can render images more quickly than a stable diffusion model can.

In some examples, the environment 300 can use one or more properties of a video game and one or more properties of a device that is used to play the video game to select the artificial intelligence model to use for generating a frame. Properties of the device can include processor speed; cache size; random access memory (RAM) type, size, or both; or any combination of these. Properties of the video game can include a recommended resolution; a game type, e.g., strategy, shooter, or simulation; a predicted number of textures for a scene; a predicted processing time for those textures; or any combination of these.

The illumination training system 306 can include several different functional components, including the illumination model 307, the discriminator 308, the rasterization engine and the path trace engine. Any one or more of the components can include one or more data processing apparatuses, can be implemented in code, or a combination of both. For instance, each of the components can include one or more data processors and instructions that cause the one or more data processors to perform the operations discussed in this specification.

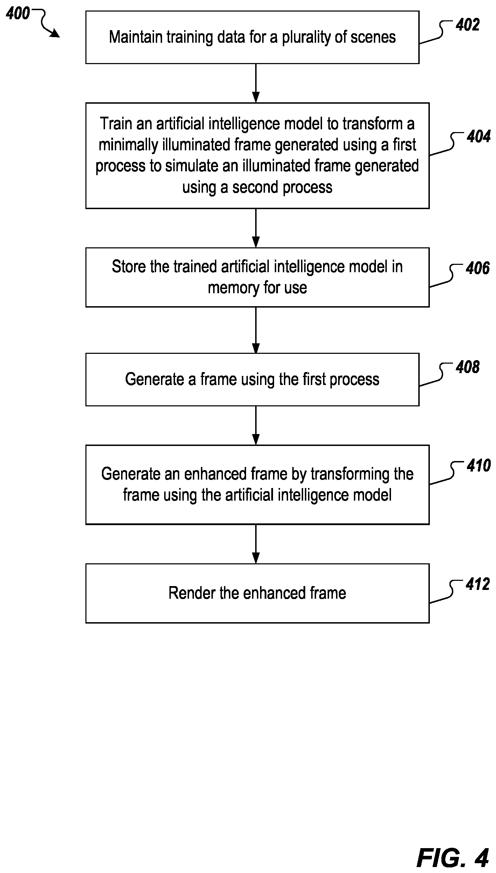

FIG. 4 is a flow diagram of an example process 400 in accordance with implementations of the present disclosure. FIG. 4 illustrates an example process 400 for training an artificial intelligence model to render an illuminated frame in real-time. For example, the process 400 can be used by the illumination training system 306, a gaming device, or a combination of both, from the environment 300.

The system maintains training data for a plurality of scenes (402). The training data can include, for each scene, a first frame of the scene that was rendered using a first process that can generate frames in real time with minimal light illumination. The training data can include, for each scene, a second frame of the scene that was rendered using a second, different process. The second frame can have more light illumination. The second process can generate frames in an offline process slower than the first process. The offline process can be too slow for real time frame rendering. In some examples, for a scene from the multiple scenes, the system can generate the first frame using the first process and generate the second frame using the second, different process.

In some examples, at least some scenes from the plurality of scenes have one or more of different points of view or depict different moving objects. In some examples, for at least some scenes from the plurality of scenes, the training data includes sequence training data. The sequence data can include a plurality of first frames that were each rendered using the first process and a plurality of second frames that were each rendered using the second process. The plurality of first frames can include a frame for each frame in the plurality of second frames. In some examples, the system can maintain training data for a single scene, a single type of scene, e.g., when the rendered illuminated frame needs to follow a specific artistic style, or both.

The system trains an artificial intelligence model to transform a minimally illuminated frame generated using the first process to simulate an illuminated frame generated using the second process (404). In some examples, the system can train the artificial intelligence model to transform the minimally illuminated frame generated using the first process to simulate the illuminated frame generated using the second process while minimizing changes to textures in the minimally illuminated frame. The system can train the artificial intelligence model using a loss function with one or more of a perceptual loss term, a reconstruction loss term, or an adversarial loss term. In some examples, the artificial intelligence model can use, for a loss function, a combination of a perceptual loss and a reconstruction loss.

As part of the training process, the system can generate the illuminated frame that simulates generation using the second process. The system can process, using a discriminator neural network, the illuminated frame to generate a discriminator output. The discriminator output can indicate whether the illuminated frame satisfies a similarity criterion for second frames generated using the second process. The system can update the artificial intelligence model using the discriminator output as a part of an adversarial loss term. Generating the discriminator output can include generating a discriminator score that indicates a likelihood whether the illuminated frame satisfies the similarity criterion for second frames generated using the second process. In some examples, the system can jointly train the discriminator neural network with the artificial intelligence model.

The system can determine for a scene type from a plurality of scene types, whether output from the artificial intelligence model does not satisfy a training criterion. The system can use a differentiator model to determine whether output from the artificial intelligence model does not satisfy the training criterion. In response to determining that the output from the artificial intelligence model does not satisfy the training criterion, the system can determine an environment in a game that has the scene type. The system can simulate, using the game, the environment that has the scene type. The system can generate the first frame and the second frame while simulating the environment of the game that has the scene type. The system can simulate the environment of the game that has the scene type during an offline process.

The system stores the trained artificial intelligence model in memory (406). The system can store the trained artificial intelligence model for use enhancing images generated using the first process to have improved light illumination. The system can maintain the trained artificial intelligence model.

The system generates a frame, using the first process (408).

The system generates an enhanced frame (410). The system can transform the frame using the artificial intelligence model. The system can generate the frame for a game. The system can maintain a plurality of artificial intelligence models that each have a different type. The different types of models in the plurality of artificial intelligence models can include a diffusion model and a convolutional neural network. In some examples, the system can select, using a complexity of a scene being rendered for the game, the artificial intelligence model for generation of the frame. In some examples, the system can select, using a target minimum frame rate for the game, the artificial intelligence model for generation of the frame. In some examples, the system can select, using a first property of the game or a second property of a device executing the game, the artificial intelligence model for generation of the frame.

The system renders the enhanced frame (412). This can occur during runtime processes, e.g., and not during training.

In some implementations, the system discards the frame after transforming the frame using the artificial intelligence model to generate the enhanced frame.

The order of operations in the process 400 described above is illustrative only, and 400 can be performed in different orders. In some examples, the process 400 can perform one or more of operations 402 through 406 after performing operation 408.

In some implementations, the process 400 can include additional operations, fewer operations, or some of the operations can be divided into multiple operations. In some implementations, the process 400 need not include operation 412. In some implementations, the process 400 can include some combination of operations from 408 to 412. In some implementations, the process 400 can include some combination of operations from 402 to 406.

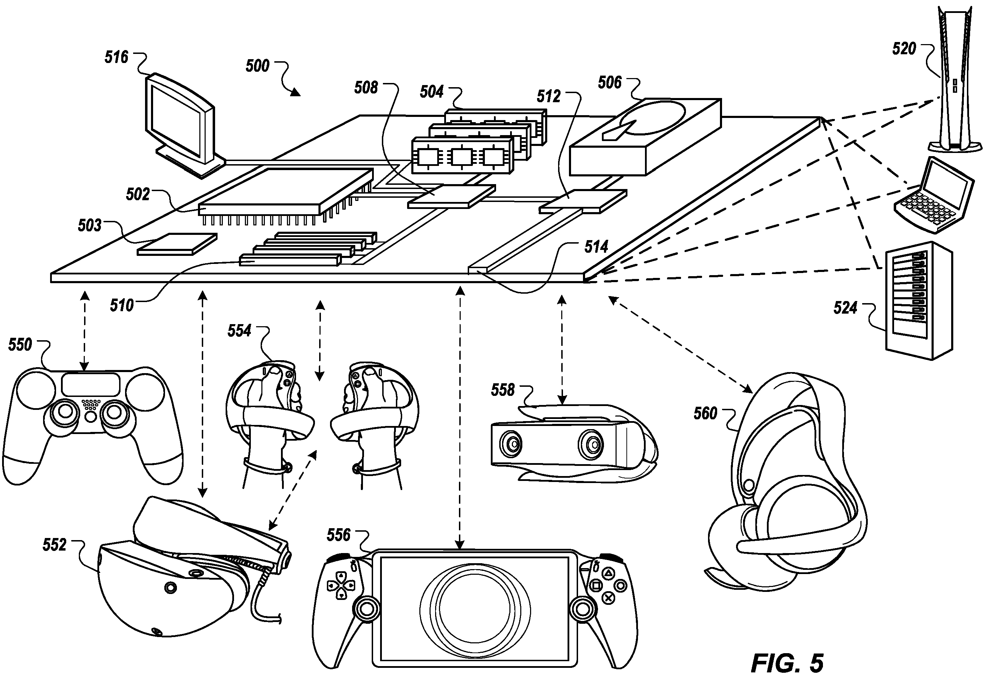

FIG. 5 shows an example of a computing device 500 and associated accessories that can be employed to execute implementations of the present disclosure. The computing device 500 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 500 can form at least a portion of a gaming system that can include one or more remote computing devices such as ones implementing a cloud-based portal or gaming platform.

In various implementations, the computing device 500 includes some combination of one or more processors or central processing units (CPUs) 502, one or more graphic processing units (GPUs) 503, memory 504, one or more storage devices 506, a high-speed interface 508, and/or a low-speed interface 512. In some implementations, the high-speed interface 508 connects to the memory 504 and multiple high-speed expansion ports 510. In some implementations, the low-speed interface 512 connects to a low-speed expansion port 514 and the storage device 504. In some implementations, the high-speed interface 508 connects to the storage device 504. Each of the processor 502, the GPU 503, the memory 504, the storage device 506, the high-speed interface 508, the high-speed expansion ports 510, and the low-speed interface 512, are interconnected using various buses, and may be mounted on a common motherboard or in other manners as appropriate. The processor 502 can process instructions for execution within the computing device 500, including instructions stored in the memory 504 and/or on the storage device 506 to display graphical information for a graphical user interface (GUI) on an external input/output device, such as a display 516 coupled to the high-speed interface 508. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 504 stores information within the computing device 500. In some implementations, the memory 504 is a volatile memory unit or units. In some implementations, the memory 504 is a non-volatile memory unit or units. The memory 504 may also be another form of a computer-readable medium, such as a magnetic or optical disk. In some implementations, the memory 504 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 506 is capable of providing mass storage for the computing device 500. In some implementations, the storage device 506 may be or include a computer-readable medium, such as a hard disk device, an optical disk device, a flash memory, or other similar solid-state memory device, or an array of devices, including devices in a storage area network or other configurations. In some implementations, the storage device 506 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 506 can be configured to support expandable storage via compatible non-volatile memory express (NVMe) SSDs. Instructions can be stored in an information carrier, and when executed by one or more processing devices, such as processor 502, perform one or more methods, such as those described above. The instructions can also be stored by one or more storage devices, such as non-transitory computer-readable or machine-readable mediums, such as the memory 504, the storage device 506, or memory on the processor 502. The instructions can constitute software for providing interactive game play on a user interface such as a graphical user interface (GUI) presented on the display 516.

The high-speed interface 508 manages bandwidth-intensive operations for the computing device 500, while the low-speed interface 512 manages lower bandwidth-intensive operations. Such allocation of functions is an example only. In some implementations, the high-speed interface 508 is coupled to the memory 504, the display 516 (e.g., through a graphics processor or accelerator), and to the high-speed expansion ports 510, which may accept various expansion cards. In the implementation, the low-speed interface 512 is coupled to the storage device 506 and the low-speed expansion port 514. The low-speed expansion port 514, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 550 such as a DualSense^{®}, DualShock^{®}, or Access^{™} controllers for PlayStation^{®} devices, a virtual reality (VR) or augmented reality (AR) headset 552 such as the PS VR2 headset, accessory controllers 554 such as PS VR2 Sense^{™} a handheld gaming device 556 such as PlayStation Portal^{®}, a camera 558, and/or an earphone/headphone set 560 such as the PULSE Elite^{™} headset or the Pulse Explore^{™} earbuds. In some implementations, the computing device 500 includes one or more acoustic transducers, and/or is connected to one or more external acoustic transducers such as one or more speakers associated with the display 516.

The computing device 500 may be implemented in a number of different forms, as shown in the FIG. 5. For example, the computing device 500 may be implemented as a gaming console 520, or as one or more servers 524 or as a rack within a server. In some implementations, the computing device 500 may be implemented as a personal computer such as a laptop computer 522. In some implementations, the computing device 500 can be implemented as a mobile device such as the connected handheld gaming device 556. In some implementations, a computing device can include one or more of the computing device 500, and an entire system may be made up of multiple computing devices communicating with each other. For example, a gaming system can include one or more of a gaming console 520, one or more accessories, and a remote platform such as a cloud-based platform implemented on one or more servers 524.

The processor 502 can be implemented as a chipset of chips that include separate and multiple analog and digital processors. For example, the processor 502 can be a multi-core processor that supports high-speed processing and enables complex computational tasks, real-time physics simulations, and advanced artificial intelligence (AI) capabilities. In one example, the processor 502 includes at least 8 cores, at least 16 threads, and operates at variable frequencies around 3.5 GHz or more. In some implementations, the processor 502 may be a Complex Instruction Set Computers (CISC) processor, a Reduced Instruction Set Computer (RISC) processor, or a Minimal Instruction Set Computer (MISC) processor.

In some implementations, the GPU 503 includes a custom GPU that supports an advanced architecture such as the RDNA 2 architecture developed by AMD. In one example, the GPU 503 includes at least 36 compute units running at speeds of 2 GHz or more, and delivers performance of at least 10 teraflops. The GPU 503 can be configured to support high quality graphics rendering. For example, the GPU 503 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 550-e.g., a DualSense^{®}, DualShock^{®}, or Access^{™} controller for PlayStation^{®} devices-to provide the gaming experience. In some implementations, the controller 550 features a high-fidelity haptic feedback system with one or more actuators that simulate a wide range of tactile sensations. In some implementations the controller 550 includes one or more adaptive triggers that adjust resistance based on in-game actions to provide for a realistic feel. The ergonomic design of the controller 550 can be configured to allow for comfortable use even in long gaming sessions. For example, the controller 550 can include textured grips and an optimized button layout. In some implementations, the controller 550 includes one or more of: integrated motion sensors, a high-resolution touchpad, and a built-in microphone array. The controller 550 includes an array of buttons, joysticks, and other controls that allow a user to interact with the computing device 500 to participate in interactive gameplay presented, for example, on a display device such as the display 516. The controller 550 can be powered by one or more regular or rechargeable batteries and supports both wireless and wired connectivity with the computing device 500, for example, via Bluetooth, WiFi, USB-C etc., or via a proprietary connection such as PlayStation Link^{™}. In some implementations, the controller 550 includes a light bar and player indicators for visual feedback and customization.

In some implementations, the input/output or accessory device includes a VR/AR headset 552. One example of such a headset is the PlayStation VR2 (PS VR2) headset that is configured to provide an immersive and interactive gaming experience. In some implementations, the headset 552 features dual organic light emitting device (OLED) displays with a combined resolution of 4000 x 2080 pixels-thus providing sharp visuals and a wide field of view. In some implementations, the VR/AR headset 552 includes advanced eye-tracking technology that enables foveated rendering, optimizing performance by focusing on where the user is looking. In some implementations, the headset 552 includes integrated cameras that facilitate tracking head movements without external sensors. In some implementations, the headset includes haptic feedback for tactile sensations and/or one or more acoustic transducers configured to provide a spatial sound effect the user. The headset 552 can include an adjustable headband and cushioned padding, and can be configured to connect to the computing device 500 either over a wireless network (e.g., over a WiFi^{®} or Bluetooth^{®} connection, or a proprietary connection such as PlayStation Link^{™}) or over a wire such as a USB-C cable.

In some implementations, the headset 552 can be configured to work in conjunction with one or more accessory controllers 554 such as the PlayStation VR2 Sense^{™} controllers. The accessory controllers 554 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 554 can be configured to provide a comfortable experience even during extended gameplay. In some implementations, the accessory controllers include one or more integrated sensors (accelerometer, gyroscope, etc.) and cameras to provide motion tracking. The accessory controllers 554 can be configured to connect to the computing device 500 and/or the headset 552 over a wireless connection such as WiFi^{®} or Bluetooth^{®}.

In some implementations, the computing device 500 can be connected to a handheld gaming device 556 such as the PlayStation Portal^{®}. The handheld gaming device 556 can be configured to stream games and media from the computing device 500 via a wireless connection such as WiFi^{®} or Bluetooth^{®}. The handheld gaming device 556 includes a high-resolution screen that allows users to play games and/or stream media remotely without using the display 516 connected to the computing device 500. This allows the display to be used for other purposes while the computing device 500 facilitates gameplay on the handheld gaming device 556. In some implementations, the handheld gaming device 556 is configured to act as a streaming receiver without running games natively on the device 556 itself. This makes the handheld gaming device 556 a convenient option for playing games run on the computing device 500, while leaving a TV connected to the computing device 500 free to be used for viewing other media. The handheld gaming device 556 can includes buttons and features similar to (or even same as) the controller 550, thus providing for a similar gaming experience as that with the controller 550.

In some implementations, the input/output or accessory devices can include a camera 558 and/or an earphone/headphone set 560 such as the PULSE Elite^{™} headset or the Pulse Explore^{™} earbuds. The camera 558 can be used to track user-movements, which in turn can be used as an input to an interactive game being executed on the computing device 500. The earphone/headphone set 560 can be used to provide audio feedback/output to a user from the computing device 500. In some implementations, the earphone/headphone set 560 can include a microphone configured to receive spoken inputs/instructions that in turn can be used to control an interactive game being executed on the computing device 500.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. One or more non-transitory computer storage media encoded with instructions that, when executed by one or more computers, cause the one or more computers to perform operations comprising:
maintaining, for each of a plurality of scenes, training data that includes a) a first frame of the scene that was rendered using a first process that can generate frames in real time with minimal light illumination and b) a second frame of the scene that was rendered using a second, different process that generates frames in an offline process slower than the first process and that has more light illumination;
training an artificial intelligence model to transform a minimally illuminated frame generated using the first process to simulate an illuminated frame generated using the second process; and
storing the trained artificial intelligence model in memory for use enhancing images generated using the first process to have improved light illumination.

2. The non-transitory computer storage media of claim 1, wherein the second process generates frames in the offline process that is too slow for real time frame rendering.

3. The non-transitory computer storage media of claim 1, wherein training the artificial intelligence model uses a loss function with one or more terms from a group comprising a perceptual loss term, a reconstruction loss term, or an adversarial loss term.

4. The non-transitory computer storage media of claim 1, wherein training the artificial intelligence model uses, for a loss function, a combination of a perceptual loss and a reconstruction loss.

5. The non-transitory computer storage media of claim 1, wherein training the artificial intelligence model comprises generating, as part of the training process, the illuminated frame that simulates generation using the second process, the operations comprising:
processing, using a discriminator neural network, the illuminated frame to generate a discriminator output that indicates whether the illuminated frame satisfies a similarity criterion for second frames generated using the second process; and
updating the artificial intelligence model using the discriminator output as a part of an adversarial loss term.

6. The non-transitory computer storage media of claim 5, the operations comprising jointly training the discriminator neural network with the artificial intelligence model.

7. The non-transitory computer storage media of claim 5, wherein generating the discriminator output comprises generating a discriminator score that indicates a likelihood whether the illuminated frame satisfies the similarity criterion for second frames generated using the second process.

8. The non-transitory computer storage media of claim 1, the operations comprising, for a scene from the plurality of scenes:
generating the first frame using the first process; and
generating the second frame using the second, different process.

9. The non-transitory computer storage media of claim 8, the operations comprising:
determining, using a differentiator model and for a scene type from a plurality of scene types, whether output from the artificial intelligence model does not satisfy a training criterion;
in response to determining that the output from the artificial intelligence model does not satisfy the training criterion, determining an environment in a game that has the scene type; and
simulating, using the game, the environment that has the scene type, wherein generating the first frame and the second frame occur while simulating the environment of the game that has the scene type.

10. The non-transitory computer storage media of claim 9, wherein simulating the environment of the game that has the scene type occurs during an offline process.

11. The non-transitory computer storage media of claim 1, wherein at least some scenes from the plurality of scenes have one or more of different points of view or depict different moving objects.

12. The non-transitory computer storage media of claim 1, wherein maintaining the training data comprises, for at least some scenes from the plurality of scenes, sequence training data that includes a) a plurality of first frames that were each rendered using the first process and b) a plurality of second frames that were each rendered using the second process, the plurality of first frames including a frame for each frame in the plurality of second frames.

13. The non-transitory computer storage media of claim 1, wherein training the artificial intelligence model comprises training the artificial intelligence model to transform the minimally illuminated frame generated using the first process to simulate the illuminated frame generated using the second process while minimizing changes to textures in the minimally illuminated frame.

14. A computer-implemented method comprising:
maintaining an artificial intelligence model that was trained to transform a minimally illuminated frame generated using a first process that can generate frames in real time with minimal light illumination to simulate an illuminated frame generated using a second, different process that generates frames in an offline process slower than the first process and that has more light illumination;
generating, using the first process, a frame;
generating an enhanced frame by transforming the frame using the artificial intelligence model; and
rendering the enhanced frame.

15. The method of claim 14, comprising discarding the frame after transforming the frame using the artificial intelligence model to generate the enhanced frame.

16. The method of claim 14, wherein generating the frame comprises generating the frame for a game, the method comprising:
maintaining a plurality of artificial intelligence models that each have a different type; and
selecting, using a complexity of a scene being rendered for the game, the artificial intelligence model for generation of the frame.

17. The method of claim 14, wherein generating the frame comprises generating the frame for a game, the method comprising:
maintaining a plurality of artificial intelligence models that each have a different type; and
selecting, using a target minimum frame rate for the game, the artificial intelligence model for generation of the frame.

18. The method of claim 14, wherein generating the frame comprises generating the frame for a game, the method comprising:
maintaining a plurality of artificial intelligence models that each have a different type; and
selecting, using a first property of the game or a second property of a device executing the game, the artificial intelligence model for generation of the frame.

19. The method of claim 18, wherein the different types of models in the plurality of artificial intelligence models comprise a diffusion model and a convolutional neural network.

20. A system comprising one or more computers and one or more storage devices on which are stored instructions that are operable, when executed by the one or more computers, to cause the one or more computers to perform operations comprising:
maintaining, for each of a plurality of scenes, training data that includes a) a first frame of the scene that was rendered using a first process that can generate frames in real time with minimal light illumination and b) a second frame of the scene that was rendered using a second, different process that generates frames in an offline process slower than the first process and that has more light illumination;
training an artificial intelligence model to transform a minimally illuminated frame generated using the first process to simulate an illuminated frame generated using the second process; and
storing the trained artificial intelligence model in memory for use enhancing images generated using the first process to have improved light illumination.
